(19) **Europäisches Patentamt / European Patent Office / Office européen des brevets**

(11) **EP 1 971 902 B1**

(12) # FASCICULE DE BREVET EUROPEEN

(45) Date de publication et mention
de la délivrance du brevet:
**22.04.2009 Bulletin 2009/17**

(21) Numéro de dépôt: **07700023.0**

(22) Date de dépôt: **10.01.2007**

(51) Int Cl.:
***G05B 19/42*** *(2006.01)*    ***E06B 9/88*** *(2006.01)*

(86) Numéro de dépôt international:
**PCT/IB2007/000062**

(87) Numéro de publication internationale:
**WO 2007/080493 (19.07.2007 Gazette 2007/29)**

(54) **PROCEDE D'APPRENTISSAGE D'UNE UNITE DE COMMANDE DE L'ALIMENTATION ELECTRIQUE D'UN MOTEUR**

LERNVERFAHREN EINER STEUEREINHEIT ZUR ELEKTRISCHEN VERSORGUNG EINES MOTORS

LEARNING METHOD OF A CONTROL UNIT FOR THE ELECTRICAL SUPPLY OF A MOTOR

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **11.01.2006 FR 0600233**

(43) Date de publication de la demande:
**24.09.2008 Bulletin 2008/39**

(73) Titulaire: **Somfy SAS**
**74300 Cluses (FR)**

(72) Inventeur: **TRANCHAND, Alain**
**F-74330 La Balme De Sillingy (FR)**

(74) Mandataire: **Bugnion Genève**
**BUGNION S.A.**
**Case 375**
**1211 Genève 12 (CH)**

(56) Documents cités:
**US-B1- 6 310 451**

## Description

L'invention se rapporte à un procédé d'apprentissage selon le préambule de la revendication 1. Elle se rapporte également à un procédé de fonctionnement selon le préambule de la revendication 8 et à un actionneur domotique pour la mise en oeuvre de ces procédés.

Dans le cas d'un dispositif de volet roulant, le tablier du volet s'enroule sur un tube. Il résulte de l'épaisseur du tablier que le rayon d'enroulement augmente au fur et à mesure de l'ouverture du volet. En fonction de la nature du tablier, une même valeur de déplacement en rotation du tube d'enroulement, peut donner naissance à des valeurs de déplacement du tablier très différentes selon que le tablier arrive sur une butée haute (diamètre d'enroulement maximum) ou sur une butée basse (diamètre d'enroulement minimum). Il en résulte une réelle difficulté à contrôler l'effort réel à ne pas dépasser lorsque le tablier arrive au contact d'une d'un obstacle tel que notamment une butée de fin de course.

Le brevet US. 6,310,451 donne un exemple de procédé d'apprentissage d'une unité de commande d'alimentation électrique d'un moteur entrainant un volet mobile.

Le but de l'invention est de fournir un procédé d'apprentissage et un procédé de commande permettant de remédier aux inconvénients cités. En particulier, les procédés selon l'invention permettent de contrôler avec précision l'intensité de l'effort à ne pas dépasser lorsqu'un élément mobile enroulable arrive au contact d'une butée ou d'un obstacle. Les procédés ayant pour but une meilleure maîtrise de l'effort en butée ou sur un obstacle, ils permettent de transmettre d'autres informations spécifiques au comportement physique du produit mobile dans ces circonstances particulières.

Le procédé d'apprentissage selon l'invention est caractérisé en ce qu'il comprend une étape dans laquelle on enregistre une information relative au rayon d'enroulement de l'élément mobile enroulable sur le tube d'enroulement.

L'information relative au rayon d'enroulement de l'élément mobile enroulable sur le tube d'enroulement peut comprendre la valeur du diamètre du tube d'enroulement, la valeur d'un rayon d'enroulement moyen de l'élément mobile enroulable calculé sur au moins une portion de la course de l'élément mobile enroulable ou une loi exprimant le rayon d'enroulement de l'élément mobile enroulable en fonction de la position de l'élément mobile enroulable ou de la position du tube d'enroulement.

Différents modes d'exécution du procédé d'apprentissage sont définis par les revendications dépendantes 2 à 7.

Le procédé de fonctionnement selon l'invention est défini par la revendication 8.

L'actionneur domotique selon l'invention est défini par la revendication 9.

Le dessin annexé représente, à titre d'exemples, un procédé d'apprentissage selon l'invention, un procédé de commande selon l'invention et une installation pour la mise en oeuvre de ces procédés.

La figure 1 est une installation permettant la mise en oeuvre des procédés.

La figure 2 est un ordinogramme d'un premier mode d'exécution d'un procédé d'apprentissage selon l'invention.

La figure 3 est un ordinogramme d'un deuxième mode d'exécution d'un procédé d'apprentissage selon l'invention.

La figure 4 est un ordinogramme d'un mode d'exécution d'un procédé de commande selon l'invention.

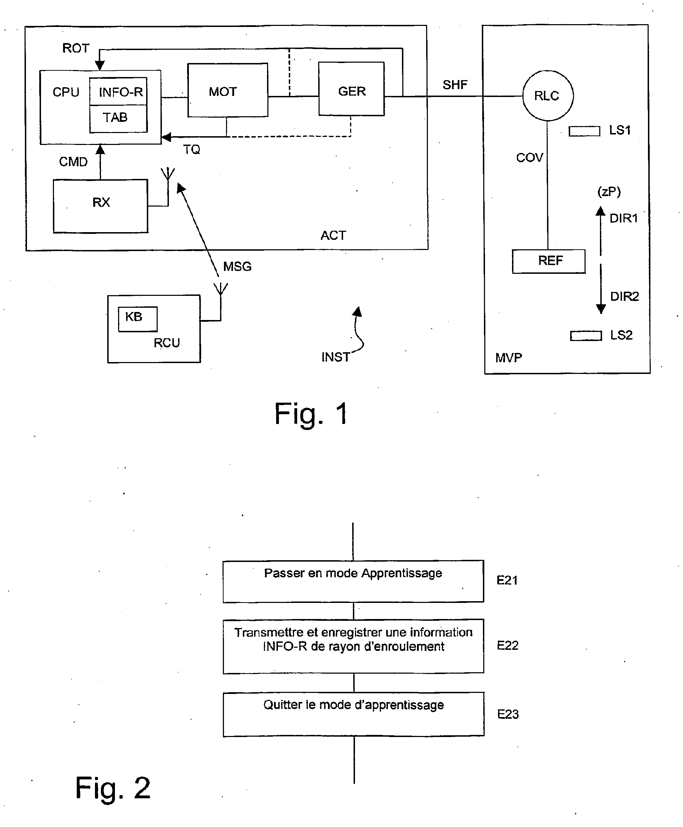

L'installation INST, représentée à la figure 1, comprend un actionneur ACT muni d'un moteur MOT dont l'arbre de sortie entraîne un réducteur GER. L'arbre de sortie SHF du réducteur GER constitue l'arbre de sortie de l'actionneur. Il est lié cinématiquement à un tube d'enroulement RLC sur lequel s'enroule un élément mobile enroulable COV. Par la commande de l'alimentation électrique du moteur, on commande ainsi les déplacements de l'élément mobile enroulable. L'extrémité inférieure de l'élément mobile enroulable COV est attachée à une barre de charge REF. L'élément mobile enroulable COV peut notamment consister en un volet roulant ou un store équipant un bâtiment.

Le moteur MOT est activé dans un premier sens ou dans un deuxième sens par une unité CPU de commande de l'alimentation du moteur MOT, cette unité comprenant par exemple un microcontrôleur. L'unité de commande reçoit des ordres de commande à l'aide d'une liaison CMD avec un récepteur d'ordres RX. Les ordres sont transmis à l'aide d'une interface de commande distante RCU, par exemple nomade, munie d'une interface homme-machine KB comportant au moins une touche de commande. De préférence, l'interface de commande distante RCU communique par ondes radioélectriques avec le récepteur d'ordres, comme représenté par la flèche MSG. De préférence, la liaison entre l'interface de commande et le récepteur d'ordres est de type bidirectionnel, ce qui permet d'afficher sur l'interface de commande distante RCU des messages relatifs à l'état de l'actionneur.

Une première grandeur interne ROT relative à la rotation du moteur est mesurée par l'unité de commande CPU. Cette grandeur est préférentiellement donnée par la sortie d'un capteur de rotation disposé à la sortie du réducteur GER. Alternativement, le capteur de rotation peut être disposé à la sortie du moteur MOT, comme représenté par un trait pointillé. Dans une variante, la grandeur interne ROT relative à la rotation du moteur est la durée d'activation du moteur. Dans ce cas, cette grandeur est mesurée par un compteur de temps du microcontrôleur compris dans l'unité de commande CPU.

Une deuxième grandeur interne TQ relative au couple mécanique fourni par le moteur est mesurée directement au niveau du moteur, comme indiqué par une flèche en trait plein, en utilisant l'intensité du courant si le moteur est à courant continu et aimants permanents ou en utilisant la tension aux bornes du condensateur de déphasage si le moteur est à induction, monophasé, à condensateur permanent. Alternativement, le couple TQ est mesuré indirectement au niveau du réducteur, comme indiqué par un trait pointillé, ou en toute autre partie de l'actionneur.

Dans chaque cas, une combinaison des différentes variantes est aussi utilisable pour définir les grandeurs internes.

Du fait de l'épaisseur de l'élément mobile enroulable (par exemple l'épaisseur des lames d'un volet roulant), le rayon d'enroulement de celui-ci peut varier fortement avec son degré d'ouverture, c'est-à-dire avec la position de la barre de charge REF.

Le mouvement de translation de cette barre de charge est limité par une première butée de fin de course haute LS1 et/ou par une deuxième butée de fin de course basse LS2. Alternativement, les limites sont fixées par enregistrement dans l'unité de commande de valeurs de comptage correspondant à ces positions extrêmes.

Un premier mode d'exécution du procédé d'apprentissage selon l'invention est décrit en référence à la figure 2.

Dans une première étape E21, on entre en mode d'apprentissage. L'entrée en mode d'apprentissagé est par exemple provoquée par une manipulation particulière d'une touche de l'interface homme-machine KB, provoquant l'émission par l'interface de commande distante d'un ordre particulier de mise en mode d'apprentissage. Dans ce mode d'apprentissage, les commandes suivantes émises par l'interface de commande distante, peuvent prendre une autre signification que les commandes normales de mise en mouvement ou d'arrêt de l'élément mobile enroulable.

Dans une deuxième étape E22, une information INFO-R relative au rayon d'enroulement de l'élément mobile enroulable est transmise à l'aide de l'interface de commande distante RCU. Cette information est enregistrée en mémoire.

Dans ce premier mode d'exécution, cette information ne comprend qu'une seule donnée de rayon d'enroulement, cette donnée étant, par exemple, le rayon moyen d'enroulement ou le rayon du tube d'enroulement RLC.

Dans le cas d'un volet roulant, le problème de la maîtrise parfaite de l'effort en butée se pose bien souvent en position de butée basse, c'est-à-dire lorsque le tablier du volet est complètement déroulé. Si la liaison entre le tube d'enroulement et le volet est de type rigide, alors le mouvement du moteur de l'actionneur va entraîner une compression des lames du tablier ce qui provoque une protection très efficace contre les tentatives d'intrusion ou encore va entraîner un léger arc-boutement de la liaison rigide ce qui est équivalent à un verrouillage du volet. L'effort de pression ou d'arc-boutement doit être contrôlé avec précision. C'est le rayon du tube d'enroulement, éventuellement augmenté de la demi-épaisseur du moyen de liaison entre tube et tablier, qui fixe la relation entre le couple du moteur et la force appliquée.

L'information INFO-R relative au rayon d'enroulement de l'élément mobile enroulable est communiquée par l'installateur selon une ergonomie appropriée. Si l'interface homme-machine KB comporte une touche de commande montée, une touche de commande descente et une touche de commande d'arrêt, une première variante d'ergonomie consiste à utiliser une seule touche de commande, par exemple la touche « Stop », pour cette fonctionnalité pendant le mode d'apprentissage. Ainsi, chaque appui sur la touche correspond à 10 mm de diamètre d'enroulement (grandeur plus naturelle pour l'installateur que le rayon) : cinq appuis sur cette touche signifiant que le diamètre d'enroulement est de 50 mm et six appuis sur cette touche signifiant que le diamètre d'enroulement est de 60 mm. Une autre variante d'ergonomie utilise deux touches : la touche « Montée » pour indiquer le nombre de dizaines de millimètres, la touche « Descente » pour indiquer le nombre d'unités de millimètres : cinq appuis sur la touche « Montée » et six appuis sur la touche « Descente » signifiant que le diamètre d'enroulement est de 56 mm.

Bien entendu, il est également possible d'utiliser un outil spécifique communiquant éventuellement de manière bidirectionnelle avec le récepteur d'ordres RX, comportant un écran et un clavier numérique et permettant ainsi une ergonomie plus simple avec indication directe des valeurs numériques.

L'information sur le rayon d'enroulement peut aussi être transmise de manière simplifiée en indiquant une catégorie prédéfinie de produit, par exemple à l'aide d'un code ASCII : un code « A » signifiant que le diamètre d'enroulement est compris dans une plage 40 à 45 mm et un code « B » signifiant que le diamètre d'enroulement est compris dans une plage 45 à 50 mm.

Dans une troisième étape E23, on quitte le mode d'apprentissage, par exemple à l'aide d'un appui spécifique sur une touche de l'interface homme-machine. D'autres étapes d'apprentissage peuvent être insérées entre la première et la dernière étape, par exemple des étapes d'apprentissage de positions extrêmes ou de positions intermédiaires spécifiques de l'élément mobile enroulable.

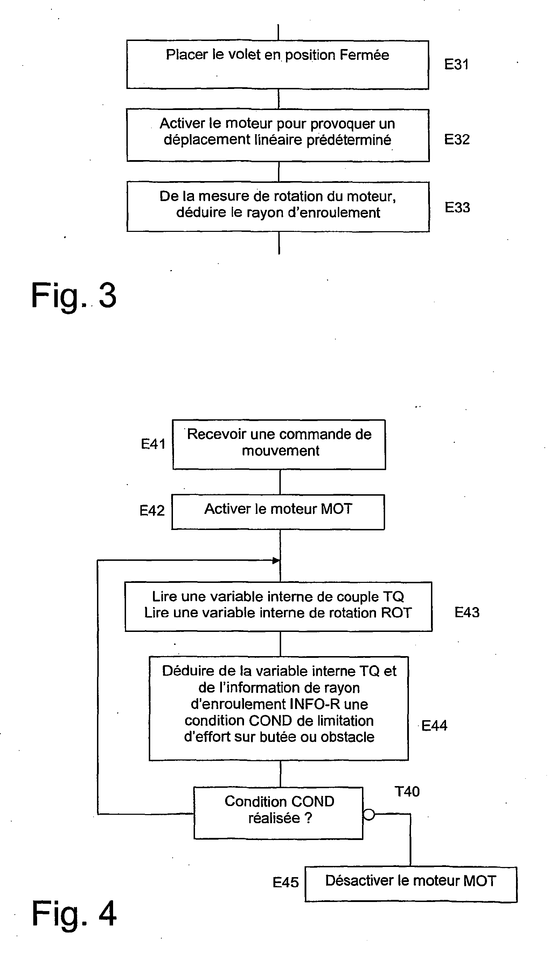

Un deuxième mode d'exécution du procédé d'apprentissage selon l'invention est décrit en référence à la figure 3. Dans ce deuxième mode, on déduit l'information de rayon d'enroulement d'un mouvement linéaire d'amplitude prédéterminée de l'élément mobile enroulable.

Les première et troisième étapes de ce deuxième mode d'exécution du procédé d'apprentissage sont identiques à celles du premier mode.

La deuxième étape se décompose en trois sous-étapes référencées E31, E32 et E33.

Dans la première sous-étape E31, on déplace l'élément mobile enroulable jusqu'à ce qu'il soit dans sa position la plus déroulée.

Dans la deuxième sous-étape E32, on commande un déplacement de l'élément mobile enroulable dont l'amplitude est déterminée et indiquée sur la notice d'installation. Par exemple, dans le cas d'un volet roulant, on remonte l'élément mobile enroulable de 50 centimètres. Un appui particulier sur une touche ou une combinaison de touches valide ce déplacement par la transmission d'un signal signifiant que l'élément mobile enroulable a été remonté de 50 centimètres.

Dans la troisième étape E33, l'unité de commande CPU déduit du nombre de tours mesuré par le capteur de rotation, la valeur moyenne du rayon d'enroulement de l'élément mobile enroulable dans cette zone.

Sans ajouter plus de complexité, deux déplacements d'amplitudes prédéfinies peuvent être utilisés pour transmettre une information plus détaillée. Par exemple, il peut être demandé à l'installateur de provoquer un arrêt intermédiaire à 20 centimètres au-dessus de la position atteinte à la sous-étape E31 et de valider ce déplacement, avant d'amener l'élément mobile enroulable dans la position de la sous-étape E32. L'information transmise au cours du procédé d'apprentissage est alors double, et permet à l'unité de commande CPU de déduire à la fois le rayon initial du tube d'enroulement et la valeur de l'épaisseur de l'élément mobile enroulable ou encore d'exprimer une loi de variation du rayon en fonction de la première grandeur interne ROT.

Le procédé de commande selon l'invention est décrit en référence à la figure 4.

Dans une étape initiale, l'actionneur est placé dans un mode de réception d'ordres, qui lui permet de recevoir un ordre de commande de mouvement émis par l'interface de commande distante RCU.

Dans une première étape E41, l'actionneur reçoit un ordre de commande de mouvement émis par l'interface de commande distante RCU.

Dans une deuxième étape E42, le moteur est activé dans le sens de rotation correspondant à l'ordre reçu, ce qui provoque le début de déplacement de l'élément mobile enroulable.

Dans une troisième étape E43, la deuxième grandeur interne TQ relative au couple moteur est mesurée. Préférentiellement, la première grandeur ROT relative à la rotation du moteur est également mesurée si le procédé d'apprentissage a permis d'établir une loi de variation du rayon d'enroulement en fonction de la première grandeur interne ROT.

Dans une quatrième étape E44, la deuxième grandeur interne TQ relative au couple moteur est utilisée avec l'information de rayon d'enroulement INFO-R pour établir une troisième grandeur relative à l'effort que l'élément mobile enroulable peut exercer sur une butée. En fixant l'effort maximal admissible sur la butée, il est alors possible de définir une condition COND de couple maximal délivré par le moteur en tout point de la course de l'élément mobile enroulable.

Par exemple, si la condition COND est que l'effort de pression sur un obstacle doit rester inférieur à 150 N et s'il s'avère que, compte tenu du rayon d'enroulement et du rapport de réduction du réducteur GER, le couple moteur correspondant à un effort de 150 N vaut 0,012 Nm et que le courant moteur iMOT mesurant cette deuxième grandeur interne TQ est de 1 A, la condition COND s'écrit simplement :

$$iMOT < 1A.$$

Si le couple moteur est proportionnel à l'intensité du courant et si le rayon d'enroulement de l'élément mobile enroulable a une valeur double de la précédente, la condition COND devient :

$$iMOT < 2A.$$

La condition COND peut aussi dépendre de la première grandeur interne ROT, mesurant la rotation du moteur puisque le rayon d'enroulement varie avec la rotation.

Plutôt que d'établir complètement la condition COND lors de la quatrième étape E44, une variante consiste à remplir une mémoire simple ou une table TAB, lors du procédé d'apprentissage du rayon d'enroulement, avec la valeur calculée ou les valeurs calculées de couple TQ servant de seuil dans la condition COND. La quatrième étape consiste alors simplement à lire la valeur de seuil dans la mémoire ou dans une position de la table relative à la mesure de la première grandeur ROT.

Dans une étape de test T40, on vérifie si la condition est réalisée. Si tel est le cas, l'effort exercé par l'élément mobile enroulable est inférieur à la valeur de seuil et le procédé de commande boucle sur la troisième étape E43. Si tel n'est pas le cas, l'effort exercé par l'élément mobile enroulable est supérieur ou égal à la valeur de seuil et l'alimentation du moteur est coupée dans une étape E45.

Deux autres paramètres physiques que le seul rayon d'enroulement, présentent un rôle déterminant lorsque le volet roulant arrive en butée : l'inertie et la raideur mécanique de l'ensemble de la chaîne cinématique. Le procédé s'applique de la même façon à transmettre une information sur ces deux grandeurs, qui peuvent intervenir dans les étapes E43 et E44 en tant que variables internes. Par information relative au rayon d'enroulement, il faut donc entendre une information relative à un paramètre physique intervenant dans une condition COND de limitation d'effort sur un obstacle tel que notamment une butée de fin de course.

## Revendications

1. Procédé d'apprentissage d'une unité (CPU) de commande de l'alimentation électrique d'un moteur (MOT) d'actionneur (ACT) domotique entraînant un tube d'enroulement (RLC) sur lequel est destiné à s'enrouler un élément mobile enroulable (COV), **caractérisé en ce qu'**il comprend une étape dans laquelle on enregistre une information (INFO-R) relative au rayon d'enroulement de l'élément mobile enroulable sur le tube d'enroulement.

2. Procédé d'apprentissage selon la revendication 1, **caractérisé en ce que** l'information relative au rayon d'enroulement de l'élément mobile enroulable sur le tube d'enroulement comprend la valeur du diamètre du tube d'enroulement.

3. Procédé d'apprentissage selon la revendication 1, **caractérisé en ce que** l'information relative au rayon d'enroulement de l'élément mobile enroulable sur le tube d'enroulement comprend la valeur d'un rayon d'enroulement moyen de l'élément mobile enroulable calculé sur au moins une portion de la course de l'élément mobile enroulable.

4. Procédé d'apprentissage selon la revendication 1, **caractérisé en ce que** l'information relative au rayon d'enroulement de l'élément mobile enroulable sur le tube d'enroulement comprend une loi exprimant le rayon d'enroulement de l'élément mobile enroulable en fonction de la position de l'élément mobile enroulable ou de la position du tube d'enroulement.

5. Procédé d'apprentissage selon l'une des revendications précédente, **caractérisé en ce qu'**il comprend une étape de saisie de l'information relative au rayon d'enroulement de l'élément mobile enroulable sur le tube d'enroulement et une étape de transmission de cette information à l'unité de commande.

6. Procédé d'apprentissage selon l'une des revendications précédentes, **caractérisé en ce qu'**il comprend une étape de déplacement de l'élément mobile enroulable entre deux positions particulières, pendant laquelle on compte le nombre de tours qu'effectue le tube d'enroulement, au moins une étape de transmission d'un signal signifiant que l'élément enroulable se trouve dans l'une des positions particulières et une étape de calcul de l'information relative au rayon d'enroulement de l'élément mobile enroulable sur le tube d'enroulement.

7. Procédé d'apprentissage selon l'une des revendications précédentes, **caractérisé en ce qu'**il comprend deux étapes de déplacement de l'élément mobile enroulable entre au moins trois positions particulières, pendant lesquelles on compte le nombre de tours qu'effectue le tube d'enroulement au moins deux étapes de transmission de signaux signifiant que l'élément enroulable se trouve dans deux des positions particulières et une étape de calcul de l'information relative au rayon d'enroulement de l'élément mobile enroulable sur le tube d'enroulement.

8. Procédé de fonctionnement d'une unité (CPU) de commande de l'alimentation électrique d'un moteur (MOT) d'actionneur domotique (ACT) entraînant un tube d'enroulement (RLC) sur lequel est destiné à s'enrouler un élément mobile enroulable (COV), **caractérisé en ce qu'**il comprend une étape d'élaboration d'une condition de coupure de l'alimentation lorsque l'élément mobile enroulable entre en contact avec un obstacle, l'élaboration se faisant à partir d'une information (INFO-R) relative au rayon d'enroulement de l'élément mobile enroulable sur le tube d'enroulement et d'un seuil d'effort admissible sur l'obstacle.

9. Actionneur domotique (ACT) comprenant une unité (CPU) de commande de l'alimentation électrique d'un moteur (MOT) et entraînant un tube d'enroulement (RLC) sur lequel est destiné à s'enrouler un élément mobile enroulable (COV), **caractérisé en ce qu'**il comprend des moyens (CPU, RX, RCU) matériels et logiciels pour la mise en oeuvre d'un procédé selon l'une des revendications 1 à 8.

## Claims

1. Learning method of a control unit (CPU) for the electrical supply of a motor (MOT) of a home automation actuator (ACT) that drives a winding-up tube (RLC) provided for winding up a windable mobile element (COV), **characterised in that** the method comprises the step of storing an information (INFO-R) relative to the radius of the rolled-up mobile element windable onto the winding-up tube.

2. Learning method according to claim 1, **characterised in that** the information relative to the radius of the rolled-up mobile element windable onto the winding-up tube comprises the value of the diameter of the winding-up tube.

3. Learning method according to claim 1, **characterised in that** the information relative to the radius of the rolled-up mobile element windable onto the winding-up tube comprises the value of an average radius of the rolled-up windable mobile element, calculated on at least a fraction of the travel of the windable element.

4. Learning method according to claim 1, **characterised in that** the information relative to the radius of the rolled-up mobile element windable onto the winding-up tube comprises a law expressing the winding radius of the mobile windable element in function of the position of the windable mobile element, or of the winding-up tube.

5. Learning method according to any one of the preceding claims, **characterised in that** it comprises a step of inputting information regarding the winding-up radius of the mobile element windable onto the winding-up tube, and a step of transmitting that information to the control unit.

6. Learning method according to any one of the preceding claims, **characterised in that** it comprises a step of displacing the windable mobile element between two particular positions and counting the number of revolutions of the winding-up tube during the displacement, at least one step of transmitting a signal indicating that the windable element has arrived in one of the particular positions, and a step of computing the information relative to the winding-up radius of the mobile element windable onto the winding-up tube.

7. Learning method according to any one of the preceding claims, **characterised in that** it comprises two steps of displacing the mobile windable element between at least three particular positions and counting the number of revolutions of the winding-up tube during these displacements; at least two steps of transmitting signals indicating that the element is situated in two of the three particular positions; and a step of computing the information relative to the winding-up radius of the mobile element windable onto the winding-up tube.

8. Method for operating a control unit (CPU) for the electrical supply of a motor (MOT) of a home automation actuator (ACT) that drives a winding-up tube (RLC) provided for winding up a windable mobile element (COV), **characterised in that** the method comprises a step of setting up a condition of cutting the electrical supply when the windable mobile element comes into contact with an obstacle, this setting up being effected starting from an information (INFO-R) relative to the winding-up radius of the mobile element windable onto the winding-up tube, and from a threshold value of an allowable load applied on the obstacle.

9. A home automation actuator (ACT), comprising a control unit (CPU) for the electrical supply of a motor (MOT) and driving a winding-up tube (RLC) provided for winding up a windable mobile element (COV), **characterised in that** it comprises hardware and software means (CPU, RX, RCU) to implement a method according to one of the claims 1 to 8.

**Patentansprüche**

1. Lernverfahren für eine Steuerungseinheit (CPU) zur elektrischen Steuerung eines Motors (MOT) eines domotischen Betätigungsgeräts (ACT), das ein Aufrollrohr (RLC) antreibt, auf welchem ein bewegliches aufrollbares Element (COV) aufgerollt werden kann, **dadurch gekennzeichnet, dass** es einen Schritt umfasst, bei welchem man eine Information (INFO-R) über den Aufrollradius des auf dem Aufrollrohr aufrollbaren beweglichen Elements registriert.

2. Lernverfahren nach Anspruch 1, **dadurch gekennzeichnet, dass** die Information über den Aufrollradius des auf dem Aufrollrohr aufrollbaren beweglichen Elements den Wert des Durchmessers des Aufrollrohrs enthält.

3. Lernverfahren nach Anspruch 1, **dadurch gekennzeichnet, dass** die Information über den Aufrollradius des auf dem Aufrollrohr aufrollbaren beweglichen Elements den Wert eines mittleren Aufrollradius des aufrollbaren beweglichen Elements enthält, welcher über wenigstens einen Teil des Verschiebungswegs des aufrollbaren beweglichen Elements berechnet wird.

4. Lernverfahren nach Anspruch 1, **dadurch gekennzeichnet, dass** die Information über den Aufrollradius des auf dem Aufrollrohr aufrollbaren beweglichen Elements ein Gesetz enthält, das den Aufrollradius des aufrollbaren beweglichen Elements als Funktion der Position des aufrollbaren beweglichen Elements oder der Position des Aufrollrohrs ausdrückt.

5. Lernverfahren nach einem der vorangehenden Ansprüche, **dadurch gekennzeichnet, dass** es einen Schritt zum Erfassen der Information über den Aufrollradius des auf dem Aufrollrohr aufrollbaren beweglichen Elements und einen Schritt zur Übertragung dieser Information an die Steuerungseinheit umfasst.

6. Lernverfahren nach einem der vorangehenden Ansprüche, **gekennzeichnet durch** einen Schritt zum Verschieben des aufrollbaren beweglichen Elements zwischen zwei besonderen Positionen, währenddessen die Anzahl der Umdrehungen gezählt wird, die das Aufrollrohr ausführt, ferner **durch** wenigstens einen Schritt zum Übertragen eines bedeutsamen Signals, dass sich das aufrollbare Element in einer der besonderen Positionen befindet, sowie **durch** einen Schritt zum Berechnen der Information über den Aufrollradius des auf dem Aufrollrohr aufrollbaren Elements.

7. Lernverfahren nach einem der vorangehenden Ansprüche, **gekennzeichnet durch** zwei Schritte zum Verschieben des aufrollbaren beweglichen Elements zwischen wenigstens drei besonderen Positionen, währenddessen die Anzahl der Umdrehungen gezählt wird, die das Aufrollrohr ausführt, ferner **durch** wenigstens zwei Schritte zum Übertragen bedeutsamer Signale, dass sich das aufrollbare Element in zwei besonderen Positionen befindet, sowie **durch** einen Schritt zum Berechnen der Information über den Aufrollradius des auf dem Aufrollrohr aufrollbaren beweglichen Elements.

8. Verfahren zum Betreiben einer Steuerungseinheit (CPU) zur Steuerung der elektrischen Speisung einer Motors (MOT) eines domotischen Betätigungsgeräts (ACT), das ein Aufrollrohr (RLC) antreibt, auf welchem ein aufrollbares bewegliches Element (COV) aufgerollt werden kann, **gekennzeichnet durch** einen Schritt zu Ausarbeitung einer Bedingung zum Unterbrechen der Speisung, wenn das aufrollbare bewegliche Element mit einem Hindernis in Kontakt kommt, wobei die Ausarbeitung von einer Information (INFO-R) über den Aufrollradius des auf dem Aufrollrohr aufrollbaren beweglichen Elements und von einem Schwellwert der auf das Hindernis wirkenden zulässigen Kraft ausgeht.

9. Domotisches Betätigungsgerät (ACT) mit einer Steuerungseinheit (CPU) zur Steuerung der elektrischen Speisung eines Motors (MOT), der ein Aufrollrohr (RLC) antreibt, auf dem ein aufrollbares bewegliches Element (COV) aufgerollt werden kann, **dadurch gekennzeichnet, dass** es Hardware- und Softwaremittel (CPU, RX, RCU) zur Durchführung eines Verfahrens nach einem der Ansprüche 1 bis 8 aufweist.

Fig. 1

| Passer en mode Apprentissage | E21 |
| Transmettre et enregistrer une information INFO-R de rayon d'enroulement | E22 |
| Quitter le mode d'apprentissage | E23 |

Fig. 2

Placer le volet en position Fermée — E31

Activer le moteur pour provoquer un déplacement linéaire prédéterminé — E32

De la mesure de rotation du moteur, déduire le rayon d'enroulement — E33

# Fig. 3

E41 — Recevoir une commande de mouvement

E42 — Activer le moteur MOT

Lire une variable interne de couple TQ
Lire une variable interne de rotation ROT — E43

Déduire de la variable interne TQ et de l'information de rayon d'enroulement INFO-R une condition COND de limitation d'effort sur butée ou obstacle — E44

Condition COND réalisée ? — T40

E45 — Désactiver le moteur MOT

# Fig. 4

**EP 1 971 902 B1**

**RÉFÉRENCES CITÉES DANS LA DESCRIPTION**

**Documents brevets cités dans la description**

- US 6310451 B